# EUROPEAN PATENT APPLICATION

(11) **EP 2 278 279 A1**
(43) Date of publication of application: **26.01.2011**
(21) Application number: 10170252.0
(22) Date of filing: 21.07.2010
(51) Int. Cl.: G01F 1/00, G01F 1/52, G01F 15/10, G01F 15/14

(54) **Thermally insulated flowmeter casing**

(30) Priority: 24.07.2009 FI 20090281 U
(71) Applicant: EHP-Tekniikka Oy, 90570 Oulu (FI)
(72) Inventor: Hiljanen, Risto, 92600, Pulkkila (FI)
(74) Representative: Söderman, Päivi Karin Lisbeth

(57) **Abstract**

The thermally-effective monitoring well according to the invention comprises a base, a weir plate attached to the base in a watertight manner, a thermally insulated lid, a side wall comprising a double-walled structure and containing, at least in part, thermal insulator, and an inlet and outlet pipe for the liquid to be measured. The apparatus according to the invention is **characterized in that** the monitoring well also comprises, between the base and the lid, an intermediate lid comprising means, e.g. an opening, for attaching the descent pipe that comprises a sensor to the said intermediate lid.

## Description

### FIELD OF THE INVENTION

The invention relates to a movable, thermally effective monitoring well for measuring water flow rate.

### PRIOR ART

Liquid flow rate has been measured for decades on site by using a weir plate pressed into a ditch, either into an open weir installation or directly into the ditch bottom. The weir plate is a so-called Thomson's weir plate provided with a V notch, and it has been universally used for a long time. In regard to flow rate measurements, both open weir installations and those pressed directly into ditch bottom present problems in the Northern climate due to freezing in the wintertime, which obviously makes measuring impossible. During summer, leaking has constituted a problem, since the weir installation and weir plate have not been sufficiently tight. Liquid has been able to flow past the sides of the weir plate and under it - and not over the weir plate, as it is supposed to do. In addition, moving these weir installations to a new measurement site has been problematic, and the weir installations often break down during transportation because they have not been to be moved.

### OBJECT OF THE INVENTION

The object of the present invention is to solve at least some of the above-mentioned problems related to prior art and to provide a movable, thermally effective monitoring well.

### BRIEF DESCRIPTION OF THE INVENTION

The thermally-effective monitoring well according to the invention comprises a base, a weir plate attached to the base in a watertight manner, a thermally insulated lid, a side wall comprising a double-walled structure and containing, at least in part, thermal insulator, as well as inlet and outlet pipes for the liquid to be measured. The apparatus according to the invention is characterized in that the monitoring well also comprises, between the base and the lid, an intermediate lid that comprises means, e.g. an opening, for attaching a descent pipe comprising a sensor to the said intermediate lid. Preferably, the lid has been arranged to be lockable in order to prevent theft and vandalism.

In a preferred embodiment, the intermediate lid comprises a hatch for taking a sample of the liquid flowing beneath it. Preferably, the said intermediate lid also functions as a thermal insulator and has been made for example of wood in order to obtain good formability and physical durability. Preferably, the thickness of the intermediate lid is sufficient to sustain the weight of a person, so that maintenance operations and other necessary operations may be performed on the sensors standing on the intermediate lid.

In another preferred embodiment, the lid of the monitoring well comprises an air pipe for ventilating the air inside the monitoring well and/or for removing dampness from the monitoring well.

In a third preferred embodiment, the monitoring well comprises a mast holder for attaching the mast of a device that generates electric power. The said device may comprise for instance a solar panel or a wind turbine. Preferably, the monitoring well also comprises means, e.g. a lift handle, for lifting and moving the well.

### DETAILED DESCRIPTION OF THE INVENTION

In the following, the invention is described in more detail referring to the preferred exemplary embodiments and the attached drawings, in which

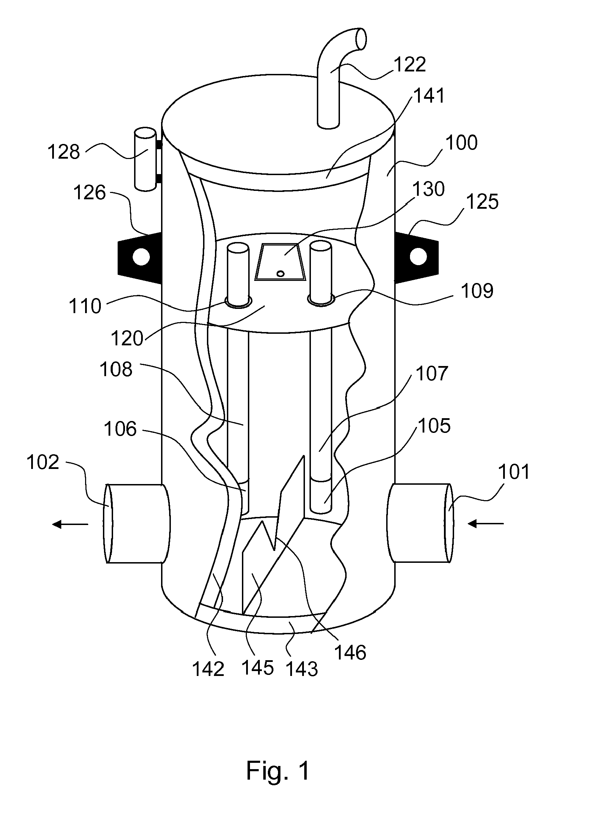

Fig. 1 shows the thermally efficient monitoring well according to the invention.

Fig. 1 show a movable, thermally efficient monitoring well 100 for measuring water flow rate. The monitoring well is made thermally efficient by lid insulator 141, wall insulator 142 and base insulator 143 as well as an intermediate lid 120, which is preferably made of plywood or wood and therefore serves as an insulator by itself. The insulator inside in the structures may be for instance air or other gas. In certain conditions, for instance, the base insulator 143 may be left out and the base built of a single layer in order to lighten and simplify the structure. Running through the top lid of the monitoring well 100, there is an air pipe 122, which leads out the moisture that accumulates inside the structure. The intermediate lid 120 contains a hatch 130 for sampling and checking purposes, and this hatch may be hinged or entirely removable. The intermediate lid also comprises means for installing the descent pipes 107 and 108 of sensors 105 and 106. The descent pipes 107 and 106 may be fitted for instance to the openings 109 and 110 provided in the intermediate lid 120, or they may be attached to the bottom of the intermediate lid 120, in which case there is no need to make an opening in the intermediate lid. On the other had, the opening 109, 110 enables an extremely rapid installation and replacement of the sensors 105, 106, if necessary. The descent pipes 107, 108 have only been presented as examples of the means for attaching the sensors 105, 106, and also other means may be used instead of them, such as rods, cables, rails etc. The amount of sensors may be varied according to the requirements of the quantities to be measured.

Sensors 105, 106 measure the flow rate and/or other characteristics of the water that flows in through the inlet pipe 101 and out through the outlet pipe 102. Between the inlet pipe 101 and the outlet pipe 102, there is for instance a weir plate 145. The weir plate 145, which comprises a V notch 146, is preferably made of plastic and has been welded to the edges of the structure in a watertight manner in order to prevent water leaks from the sides. The flow rate of the water may be determined by examining the level of the water flowing through the V notch 146.
The structure 100 of the monitoring well structure also comprises lift handles 125 and 126 for lifting the apparatus and loading it on a vehicle, for instance by a crane. The structure also contains a mast holder 128 for erecting and fixing the mast of a solar panel. The electric current required by the sensors 105, 106 may in isolated sites be generated by solar panels, and therefore the mast holder facilitates and quickens the process of setting up the monitoring well at the installation site.

It is obvious for a person skilled in the art that for the sake of the clarity of the specification, the exemplary embodiments presented above are relatively simple in their structure and function. Following the design disclosed in the present patent application, different and even highly complex solutions can be constructed, in which the inventive idea disclosed in the present patent application has been implemented.

## Claims

1. Thermally effective monitoring well (100) comprising a base, a weir plate (145) attached to the base in a watertight manner, a thermally insulated (141) lid, a side wall comprising a double-walled structure and containing, at least in part, thermal insulator (142), and an inlet pipe (101) and outlet pipe (102) for the liquid, **characterized in that** the said monitoring well also comprises, between the base and the lid, an intermediate lid (120) comprising means, for example an opening, for attaching a descent pipe (107, 108) comprising a sensor (105, 106) to the said intermediate lid (120).

2. A monitoring well (100) according to claim 1, **characterized in that** the intermediate lid (120) comprises a hatch (130) for sampling the liquid that flows beneath it.

3. A monitoring well (100) according to any one of claims 1 to 2, **characterized in that** the lid of the said monitoring well (100) comprises an air pipe (122).

4. A monitoring well (100) according to any one of claims 1 to 3, **characterized in that** the intermediate lid (120) is a thermal insulator containing wood.

5. A monitoring well (100) according to any one of claims 1 to 4, **characterized in that** it comprises a mast holder (128) for attaching the mast of a device that generates electric power.
